# EUROPEAN PATENT APPLICATION

(11) **EP 4 838 847 A1**
(43) Date of publication of application: **11.11.2026**
(21) Application number: 24921608.6
(22) Date of filing: 07.11.2024
(51) Int. Cl.: H04L 27/26

(54) **DATA TRANSMISSION METHOD, DEVICE AND STORAGE MEDIUM**

(30) Priority: 01.02.2024 CN 202410145172
(71) Applicant: ZTE Corporation, Shenzhen, Guangdong 518057 (CN)
(72) Inventor: XIN, Yu, Shenzhen, Guangdong 518057 (CN); BAO, Tong, Shenzhen, Guangdong 518057 (CN); HUA, Jian, Shenzhen, Guangdong 518057 (CN)
(74) Representative: Aipex B.V.
(86) International application number: PCT/CN2024/130545
(87) International publication number: WO 2025/161584

(57) **Abstract**

Provided are a data transmission method, a device, and a storage medium. The method includes performing convolution modulation on a first data sequence and a second data sequence to obtain a third data sequence; and transmitting the third data sequence on a physical time-frequency resource. The first data sequence and the second data sequence are pre-generated, and the second data sequence includes three non-zero elements: a first element, a second element, and a third element. The ratio of the first element to the second element and the ratio of the third element to the second element are complex conjugates of each other and are different from each other.

## Description

### TECHNICAL FIELD

The present application relates to the field of communication technologies, specifically a data transmission method, a device, and a storage medium.

### BACKGROUND

In high-frequency scenarios, path loss and shadow fading are relatively large. Therefore, the signal-to-noise ratio (SNR) in some areas at a cell edge is very low. In addition, in high-frequency scenarios, the efficiency of a power amplifier (PA) is relatively low. To improve the SNR and reduce the battery power consumption of a user equipment (UE), it is required that the peak-to-average power ratio (PAPR) of a signal transmitted by the UE be relatively low.

In a massive machine-type communication (mMTC) scenario, some user equipment is expected to significantly reduce battery power consumption, for example, to achieve a battery life of more than ten years. Therefore, to improve the PA efficiency of such UE, it is required that the PAPR of the transmitted signal be relatively low. Under the condition of non-orthogonal access of a large number of users, the signal to interference plus noise ratio (SINR) is very low. Therefore, there is an urgent need for a signal modulation scheme with low modulation and coding scheme (MCS) and low PAPR.

Although a discrete Fourier transform-spread-orthogonal frequency division multiplexing (DFT-s-OFDM) signal has a relatively low PAPR, it cannot meet the requirements of application scenarios requiring even lower PAPR in 6G. Therefore, how to design a modulation scheme with a reduced PAPR is an urgent problem to be solved.

### SUMMARY

In view of this, embodiments of the present application provide a data transmission method, a device, and a storage medium, effectively reducing the PAPR of a signal modulation scheme.

Embodiments of the present application provide a data transmission method.

The method includes performing convolution modulation on a first data sequence and a second data sequence to obtain a third data sequence; and transmitting the third data sequence on a physical time-frequency resource. The second data sequence includes three non-zero elements: a first element, a second element, and a third element. The ratio of the first element to the second element and the ratio of the third element to the second element are complex conjugates of each other and are different from each other.

Embodiments of the present application provide a communication device. The communication device includes a memory and at least one processor.

The memory is configured to store at least one program.

When executed by the at least one processor, the at least one program causes the least one processor to perform the method of any previous embodiment.

Embodiments of the present application provide a storage medium storing a computer program which, when executed by a processor, causes the processor to perform the method of any previous embodiment.

### BRIEF DESCRIPTION OF DRAWINGS

FIG. 1 is a flowchart of a data transmission method according to embodiments of the present application.
FIG. 2 is a diagram of constellation points corresponding to a fourth data sequence according to embodiments of the present application.
FIG. 3 is a diagram of constellation points corresponding to a third data sequence according to embodiments of the present application.
FIG. 4 is a diagram of constellation points corresponding to a fourth data sequence according to embodiments of the present application.
FIG. 5 is a diagram of constellation points corresponding to a third data sequence according to embodiments of the present application.
FIG. 6 is a diagram of constellation points corresponding to a fourth data sequence according to embodiments of the present application.
FIG. 7 is a diagram of constellation points corresponding to a third data sequence according to embodiments of the present application.
FIG. 8 is a diagram illustrating an implementation of a multipath delay operation according to embodiments of the present application.
FIG. 9 is a diagram illustrating reference signal insertion according to embodiments of the present application.
FIG. 10 is a flowchart of performing frequency-domain shaping on a third data sequence according to embodiments of the present application.
FIG. 11 is a block diagram of a data transmission apparatus according to embodiments of the present application.
FIG. 12 is a diagram illustrating the structure of a communication device according to embodiments of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

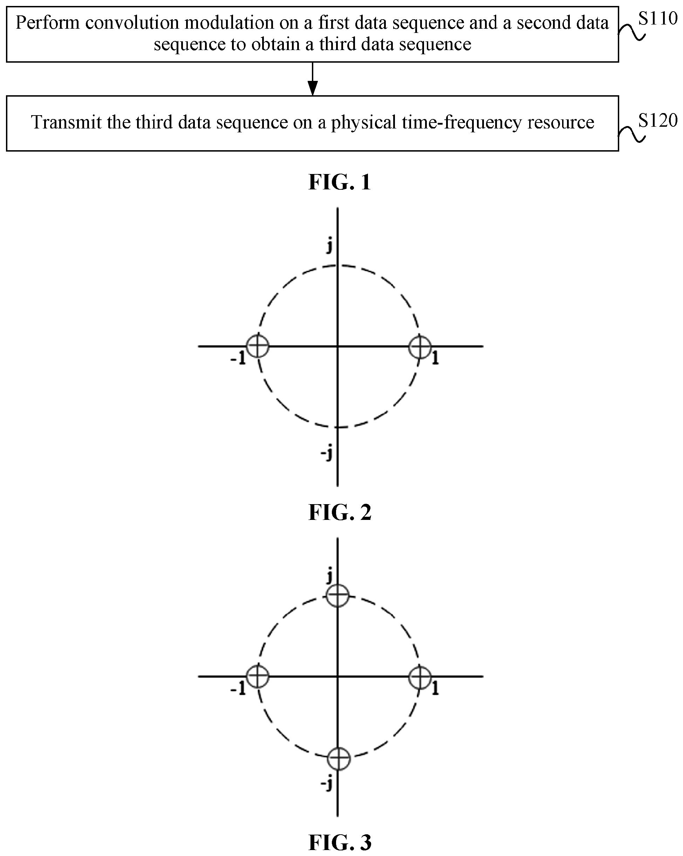

In an embodiment, FIG. 1 is a flowchart of a data transmission method according to embodiments of the present application. This embodiment is applied to a scenario of designing a signal modulation scheme with reduced PAPR. As shown in FIG. 1, this embodiment includes S110 and S120.

In S110, convolution modulation is performed on a first data sequence and a second data sequence to obtain a third data sequence.

The first data sequence and the second data sequence are pre-generated. The first data sequence includes N data elements. N is a positive integer greater than 1. In an example, the first data sequence may be generated from a binary data sequence composed of 0 and 1. In an embodiment, 0 and 1 may form a binary data sequence, a fourth data sequence is generated through binary phase shift keying (BPSK) constellation modulation, and 0 is inserted between every two adjacent elements in the fourth data sequence generated through modulation to form a corresponding first data sequence. The second data sequence may include three non-zero elements, for example, a first element, a second element, and a third element. The ratio between two adjacent non-zero elements in the second data sequence is complex conjugates of and is different from the ratio between another two adjacent non-zero elements in the second data sequence. The ratio between the two adjacent non-zero elements is the ratio of the first element to the second element. The ratio between the other two adjacent non-zero elements is the ratio of the third element to the second element. The number of elements in the first data sequence, the number of elements in the second data sequence, and the number of elements in the third data sequence are all greater than 1. The ratio of the first element to the second element is complex conjugates of and is different from the ratio of the third element to the second element. In an example, the first data sequence and the second data sequence include the same number of elements. Convolution modulation is performed on the first data sequence and the second data sequence to form the third data sequence. The modulus value of each data in the third data sequence is equal to 1. The phase difference between adjacent data elements in the third data sequence is 0 or ±π/2. In this case, the peak-to-average ratio of the third data sequence is relatively low.

In an example, the first data sequence, the second data sequence, and the third data sequence are all time-domain data, and convolution modulation is performed on the first data sequence and the second data sequence to obtain the third data sequence.

In S120, the third data sequence is transmitted on a physical time-frequency resource.

Convolution modulation is performed on the first data sequence and the second data sequence to obtain the third data sequence. The third data sequence is transmitted on a preconfigured physical time-frequency resource. The peak-to-average ratio of the third data sequence is reduced by convolution modulation on the first data sequence and the second data sequence.

In an embodiment, the data transmission method also includes performing zero insertion between every two adjacent elements in a fourth data sequence that is pre-generated to obtain the first data sequence, where the number of elements in the fourth data sequence is greater than 1.

The fourth data sequence may be a data sequence formed by BPSK constellation modulation on a binary data sequence composed of 0 and 1. The fourth data sequence includes M elements. M is a positive integer greater than 1. In an example, when the fourth data sequence is [1, 1, -1, -1, 1], the obtained first data sequence is [1, 0, 1, 0, -1, 0, -1, 0, 1, 0] or [0, 1, 0, 1, 0, -1, 0, -1, 0, 1]. 0 is inserted between every two adjacent elements in the fourth data sequence, facilitating convolution and multipath delay operation on the first data sequence and the second data sequence so that when data of paths with a delay difference of two unit delay lengths are superimposed, the influence from the intermediate path is avoided.

In an embodiment, the second data sequence includes three non-zero elements: a first element, a second element, and a third element.

In an embodiment, the modulus value of the ratio of the first element to the second element is equal to the modulus value of the ratio of the third element to the second element.

In an embodiment, the modulus value of the ratio of the first element to the second element and the modulus value of the ratio of the third element to the second element may be both $\frac{\sqrt{2}}{2}$.

In an embodiment, the complex phase of the ratio of the first element to the second element and the complex phase of the ratio of the third element to the second element are opposite to each other. The complex phase of the ratio of the first element to the second element refers to the phase of a complex number corresponding to the ratio of the first element to the second element. The complex phase of the ratio of the third element to the second element refers to the phase of a complex number corresponding to the ratio of the third element to the second element. The sum of the complex phase of the ratio of the first element to the second element and the complex phase of the ratio of the third element to the second element is 0.

In an embodiment, the ratio of the first element to the second element and the ratio of the third element to the second element are complex conjugates of each other.

In an embodiment, the complex phase of the ratio of the first element to the second element and the complex phase of the ratio of the third element to the second element each include $\frac{π}{4}$ or $- \frac{π}{4}$; and the complex phase of the ratio of the first element to the third element includes $\frac{π}{2}$ or $- \frac{π}{2}$.

In an example, when the complex phase of the ratio of the first element to the second element is $\frac{π}{4}$, the complex phase of the ratio of the third element to the second element is $- \frac{π}{4}$; and conversely, when the complex phase of the ratio of the first element to the second element is $- \frac{π}{4}$, the complex phase of the ratio of the third element to the second element is $\frac{π}{4}$. The complex phase of the ratio of the first element to the third element may be $\frac{π}{2}$ or $- \frac{π}{2}$.

In an embodiment, the value of the ratio of the first element to the second element includes $\frac{1 - j}{2}$ or $\frac{1 + j}{2}$; and the value of the ratio of the third element to the second element includes $\frac{1 - j}{2}$ or $\frac{1 + j}{2}$.

In an example, when the value of the ratio of the first element to the second element is $\frac{1 - j}{2}$, the value of the ratio of the third element to the second element is $\frac{1 + j}{2}$; and conversely, when the value of the ratio of the first element to the second element is $\frac{1 + j}{2}$, the value of the ratio of the third element to the second element is $\frac{1 - j}{2}$.

In an embodiment, the sum of the first element and the third element is equal to the second element. The value of the first element and the value of the third element are added to obtain the value of the second element.

In an embodiment, performing convolution modulation on the first data sequence and the second data sequence to obtain the third data sequence includes multiplying a power factor that is pre-configured by the second data sequence to obtain a first product sequence; and performing convolution modulation on the first data sequence and the first product sequence to obtain the third data sequence. The modulus value of the product of the power factor and the element two in the second data sequence is equal to 1.

The power factor may also be referred to as a rotation factor. In an example, when the element two in the second data sequence is 1, the power factor is configured to 1 so that power normalization can be ensured, thereby facilitating convolution modulation. The first product sequence is a data sequence obtained by multiplying the power factor by the second data sequence. In an embodiment, the power factor may be multiplied by a second data sequence to obtain the first product sequence, and then convolution modulation is performed on the first data sequence and the first product sequence to obtain the third data sequence.

In an embodiment, performing convolution modulation on the first data sequence and the second data sequence to obtain the third data sequence includes performing convolution modulation on the first data sequence and the second data sequence to obtain a convolution-modulated sequence; and multiplying the convolution-modulated sequence by a power factor that is pre-configured to obtain the third data sequence.

The convolution-modulated sequence is a modulated sequence generated by convolution modulation on the first data sequence and the second data sequence. In an embodiment, convolution modulation may be performed on the first data sequence and the second data sequence to generate a convolution-modulated sequence, and then the convolution-modulated sequence is multiplied by the power factor to obtain the third data sequence.

In an embodiment, performing convolution modulation on the first data sequence and the second data sequence to obtain the third data sequence includes multiplying the first data sequence by a power factor that is pre-configured to obtain a second product sequence; and performing convolution modulation on the second product sequence and the second data sequence to obtain the third data sequence.

The second product sequence is a data sequence obtained by multiplying the power factor by the first data sequence. In an embodiment, the power factor may be multiplied by the first data sequence to obtain the second product sequence, and then convolution modulation is performed on the second data sequence and the second product sequence to obtain the third data sequence, facilitating convolution modulation. In an example, multiplying the first data sequence by the power factor to obtain the second product sequence and performing convolution modulation on the second product sequence and the second data sequence is equivalent to multiplying the power factor by the second data sequence to obtain the first product sequence and performing convolution modulation on the first data sequence and the first product sequence.

In an embodiment, the value of the power factor includes 1 or $\frac{\sqrt{2}}{2}$. In an example, when the second element in the second data sequence is 1, the value of the power factor is 1. In an example, when the second element in the second data sequence is 1, the value of the power factor is $\frac{\sqrt{2}}{2}$.

In an embodiment, the second data sequence includes one set of the following sets of elements: $\frac{1 - j}{2} , 1 , \frac{1 + j}{2} ;$ $\frac{1 + j}{2} , 1 , \frac{1 - j}{2} ;$ $1 , 1 - j , - j ;$ $- j , 1 - j , 1 ;$ $1,1 + j , j ;$ $j , 1 + j , 1 ;$ $- 1 , - 1 + j , j ;$ $j , - 1 + j , - 1 ;$ $- 1 , - 1 - j , - j ;$ or $- j , - 1 - j , - 1 .$

In an example, when the second data sequence is $\frac{1 - j}{2}$, 1, $\frac{1 + j}{2}$ or $\frac{1 + j}{2}$, 1, $\frac{1 - j}{2}$, the value of the power factor is 1; or when the second data sequence is 1,1 - j,-j; -j, 1 - j, 1; 1,1 + j, j; j, 1 + j, 1; -1, -1 + j, j; j, -1 + j, -1; -1, -1 - j,-j; or -j, -1 - j, -1, the value of the power factor is $\frac{\sqrt{2}}{2}$. That is, the second product sequence may include one set of the following sets of elements: $\frac{1 - j}{2} , 1 , \frac{1 + j}{2} ;$ $\frac{1 + j}{2} , 1 , \frac{1 - j}{2} ;$ $\frac{\sqrt{2}}{2} \left[1,1-j,-j\right] ;$ $\frac{\sqrt{2}}{2} \left[-j,1-j,1\right] ;$ $\frac{\sqrt{2}}{2} \left[1,1+j,j\right] ;$ $\frac{\sqrt{2}}{2} \left[j,1+j,1\right] ;$ $\frac{\sqrt{2}}{2} \left[-1,-1+j,j\right] ;$ $\frac{\sqrt{2}}{2} \left[j,-1+j,-1\right] ;$ $\frac{\sqrt{2}}{2} \left[-1,-1-j,-j\right] ;$ or $\frac{\sqrt{2}}{2} \left[-j,-1-j,-1\right] .$

In an embodiment, the data transmission method also includes performing constellation modulation on a binary data sequence to obtain the fourth data sequence.

The binary data sequence is a data sequence composed of 0 and 1. The number of elements in the binary data sequence is greater than 1. The fourth data sequence is a binary data sequence subjected to constellation modulation. The constellation modulation may include, but is not limited to, BPSK constellation modulation. In an example, the binary data sequence may be pre-generated and is subjected to BPSK constellation modulation to obtain the fourth data sequence.

In an embodiment, the fourth data sequence is a binary phase shift keying (BPSK) modulated sequence.

In an embodiment, the fourth data sequence includes: constellation-modulated data; or constellation-modulated data and reference signal data.

The number of reference signal data elements may be at least one. Both the reference signal data and the constellation-modulated data use BPSK modulation.

In an embodiment, performing zero insertion between every two adjacent elements in the fourth data sequence includes one of the following: inserting a zero between every two adjacent elements in the fourth data sequence and inserting a zero after a last element in the fourth data sequence; inserting a zero after each element in the fourth data sequence; inserting a zero between every two adjacent elements in the fourth data sequence and inserting a zero before a first element in the fourth data sequence; or inserting a zero before each element in the fourth data sequence.

In an example in which the fourth data sequence is [1, 1, -1, -1, 1], in the case where 0 is inserted between every two adjacent elements in the fourth data sequence and 0 is inserted after the last element in the fourth data sequence, the first data sequence is [1, 0, 1, 0, -1, 0, -1, 0, 1, 0]; in the case where 0 is inserted after each element in the fourth data sequence, the first data sequence is [1, 0, 1, 0, -1, 0, -1, 0, 1, 0]; in the case where 0 is inserted between every two adjacent elements in the fourth data sequence and 0 is inserted before the first element in the fourth data sequence, the first data sequence is [0, 1, 0, 1, 0, -1, 0, -1, 0, 1]; and in the case where 0 is inserted before each element in the fourth data sequence, the first data sequence is [0, 1, 0, 1, 0, -1, 0, -1, 0, 1]. For the case where 0 is inserted between every two adjacent elements in the fourth data sequence and 0 is inserted after the last element in the fourth data sequence and for the case where 0 is inserted between every two adjacent elements in the fourth data sequence and 0 is inserted before the first element in the fourth data sequence, when viewed cyclically, 0 is inserted between the last element and the first element.

In an embodiment, the convolution modulation includes: circular convolution or a multipath delay operation. In an embodiment, when the convolution modulation includes the multipath delay operation and the second data sequence includes the three non-zero elements, the three non-zero elements in the second data sequence are coefficients of three delay paths.

In an embodiment, the delay difference of the delay path corresponding to the first element in the second data sequence is -1, the delay difference of the delay path corresponding to the second element in the second data sequence is 0, and the delay difference of the delay path corresponding to the third element in the second data sequence is 1.

In an example, the three non-zero elements in the second data sequence are set to [a, b, c], where a refers to the first element, b refers to the second element, and c refers to the third element. When the convolution modulation is the multipath delay operation, the three non-zero elements may be used as the coefficients of three delay paths. The delay difference of the delay path corresponding to the second non-zero element is 0, that is, no delay.

In an embodiment, performing convolution modulation on the first data sequence and the second data sequence to obtain the third data sequence includes performing a multipath circular delay operation with a delay path of a first value on the first data sequence, where the first value is the sum of the following three products: the product of the first element in the second data sequence and the delay path corresponding to the first element, the product of the second element in the second data sequence and the delay path corresponding to the second element, and the product of the third element in the second data sequence and the delay path corresponding to the third element.

In an example, the first value may be a*D*⁻¹ + b*D*⁰ + c*D*¹. Correspondingly, the first data sequence undergoes a multipath circular delay operation with a delay path of a*D*⁻¹ + b*D*⁰ + c*D*¹ to obtain the third data sequence. Here *D*⁻¹ corresponds to a delay path with a delay difference of -1, *D*⁰ corresponds to a delay path with a delay difference of 0 (that is, no delay), and *D*¹ corresponds to a delay path with a delay difference of 1. In the first data sequence, the distance between adjacent elements is equal to a delay difference of ±1.

In an embodiment, performing convolution modulation on the first data sequence and the second data sequence to obtain the third data sequence includes performing circular convolution on the first data sequence and the second data sequence, where the coefficient of the delay path with a delay difference of -1 is equal to the first element in the second data sequence, the coefficient of the delay path with a delay difference of 0 is equal to the second element in the second data sequence, and the coefficient of the delay path with a delay difference of 1 is equal to the third element in the second data sequence.

In an example, circular convolution is performed on the first data sequence to obtain the third data sequence, where the first element in the second data sequence is used as the coefficient of the delay path with a delay difference of -1, the second element in the second data sequence is used as the coefficient of the delay path with a delay difference of 0, and the third element in the second data sequence is used as the coefficient of the delay path with a delay difference of 1. In an example, the three non-zero elements in the second data sequence are set to [a, b, c], where a refers to the first element, b refers to the second element, and c refers to the third element. When the convolution modulation is circular convolution, convolution is performed on coefficients [d(-1), d(0), d(1)] of the three delay paths of the first data sequence and the second data sequence, where d(-1) = a, d(0) = b, and d(1) = c.

In an embodiment, performing convolution modulation on the first data sequence and the second data sequence to obtain the third data sequence includes performing circular convolution on the first data sequence and the second data sequence, where in the second data sequence, the last-position element is the first element, the first-position element is the second element, the second-position element is the third element, and other-position elements are 0.

In an embodiment, circular convolution is performed on the first data sequence to generate the third data sequence, where in the second data sequence, the last-position element may be used as the first element, the first-position element may be used as the second element, the second-position element may be used as the third element, and other-position elements may be set to 0. By way of example, the three non-zero elements in the second data sequence are set to [a, b, c], where a refers to the first element, b refers to the second element, and c refers to the third element. Convolution modulation is performed on the first data sequence to obtain the third data sequence, where when the second data sequence is denoted as [d(v)], d(V-1) = a, d(0) = b, d(1) = c, and d(v) = 0, where v = 0, 1, 2, ..., V-1, and V is a positive integer.

In an embodiment, the first element is cyclically adjacent to the second element. For example, if the first element is the first-position element in the second data sequence, the second element may be the second-position element in the second data sequence; or if the first element is the last-position element in the second data sequence, the second element may be the first-position element in the second data sequence.

In an embodiment, performing convolution modulation on the first data sequence and the second data sequence to obtain the third data sequence includes performing convolution modulation on the first data sequence and the second data sequence to obtain the third data sequence, where the second data sequence includes the same number of elements as the first data sequence.

In an embodiment, the second data sequence includes three non-zero elements, and the second data sequence and the first data sequence include the same number of elements. It may be understood that in the second data sequence, other elements may be set to 0, facilitating convolution modulation on the first data sequence and the second data sequence to obtain the third data sequence.

In an embodiment, the data processing method also includes multiplying the third data sequence by a preconfigured complex constant to obtain a new third data sequence, where the third data sequence is subject to at least one of the following operations: adding a reference sequence; Fourier transform; frequency-domain shaping; inverse Fourier transform; or filtering.

The complex constant may be a preset coefficient. The third data sequence may be multiplied by a preconfigured complex constant to obtain a new third data sequence, and the new third time-domain data sequence is transmitted on a time-frequency resource. In an example, reference sequences may be added to both ends of the third data sequence, where the length of the reference sequence added at the tail may be greater than that of the reference sequence added at the head, similar to the function of a cyclic prefix (CP), thereby facilitating signal estimation and phase tracking. In an example, the third data sequence may be subjected to a Fourier transform, frequency-domain shaping, and an inverse Fourier transform in sequence to obtain a new third data sequence; or the third data sequence may be subjected to a Fourier transform, frequency-domain shaping, an inverse Fourier transform, and filtering in sequence to obtain a new third data sequence, and then the new third data sequence is transmitted on a time-frequency resource.

The following describes the generation process of the third data sequence by using different examples.

In the following examples, the data modulation process is described using an example in which the second data sequence includes three non-zero elements (that is, a first element, a second element, and a third element). The first element is denoted as a, the second element is denoted as b, and the third element is denoted as c, the power factor is denoted as p, and the three non-zero elements included in the second data sequence are denoted as [a, b, c].

Example One: This example describes performing convolution modulation on a BPSK-modulated first data sequence and a first product sequence p*[a, b, c]. This example describes the process of generating a third data sequence. In this process, a second data sequence is multiplied by a power factor to obtain a first product sequence, and convolution modulation is performed on the first product sequence and the second data sequence to obtain the third data sequence, where the second data sequence is pre-generated and the power factor is pre-configured.

In an example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the first product sequence p*[a, b, c] to form the third data sequence [s(k)].

Elements a, b, and c in the first product sequence p*[a, b, c] have the following characteristics: $\frac{a}{b} = conjugate \left(\frac{c}{b}\right)$, and $\frac{a}{b} \neq \frac{c}{b}$, where conjugate() denotes a conjugate operation, that is, $\frac{a}{b}$ and $\frac{c}{b}$ are complex conjugates of each other.$module \left(\frac{a}{b}\right) = module \left(\frac{c}{b}\right) = \frac{\sqrt{2}}{2}$. module() denotes a modulus operation, that is, the modulus value of $\frac{a}{b}$ and the modulus value of $\frac{c}{b}$ are the same and are both $\frac{\sqrt{2}}{2}$. $φ \left(a/b\right) = - φ \left(c/b\right) = \pm \frac{π}{4} . φ \left(a/c\right) = \pm \frac{π}{2}$. φ() denotes the phase of a complex number. That is, the complex phase of the ratio of a to b and the complex phase of the ratio of c to b may both be $\pm \frac{π}{4}$, and the complex phase of the ratio of a to c may be $\pm \frac{π}{2}$. In the case where $\frac{a}{b} = \frac{1 - j}{2} , \frac{c}{b} = \frac{1 + j}{2}$. In the case where $\frac{a}{b} = \frac{1 + j}{2} , \frac{c}{b} = \frac{1 - j}{2}$. a + c = b.

p denotes a power factor or a rotation factor. module(p*b) = 1. That is, the modulus value of the product of the power factor and the second element in the second data sequence is equal to 1.

In an example, as shown in Table 1, 10 first product sequences p*[a, b, c] are listed. The power factor p corresponding to the first second data sequence and the power factor p corresponding to the second second data sequence in Table 1 are both 1, that is, the first product sequence p*[a, b, c] is also the second data sequence [a, b, c]. The power factor corresponding to each of the 3-10th second data sequences in Table 1 is $\frac{\sqrt{2}}{2}$.

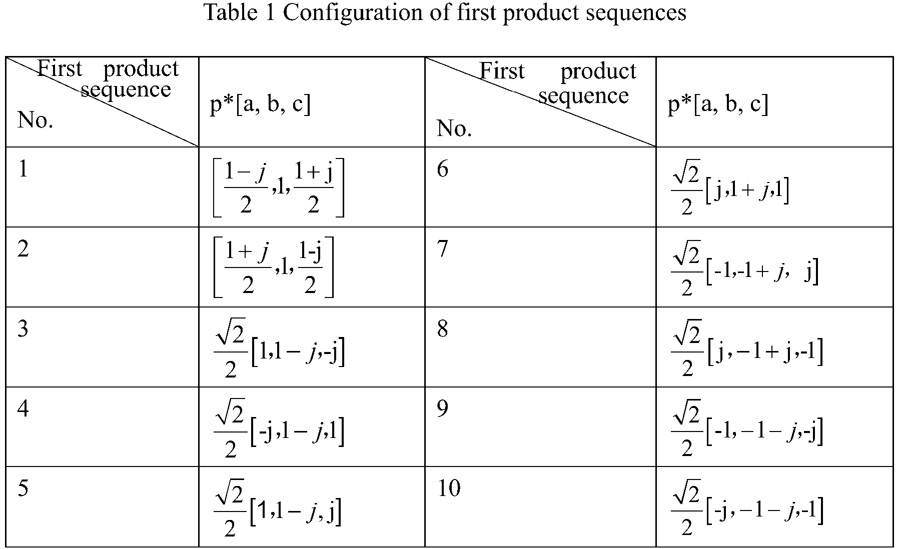

Example Two: FIG. 2 is a diagram of constellation points corresponding to a fourth data sequence according to embodiments of the present application. This example describes performing convolution modulation on a first data sequence and a second data sequence [a, b, c], where the first data sequence is obtained based on a BPSK modulated sequence. The following describes the generation process of the third data sequence by using the second data sequence $\left[a, b, c\right] = \left[\frac{1 - j}{2}, 1, \frac{1 + j}{2}\right]$ as an example.

In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence $\left[a, b, c\right] = \left[\frac{1 - j}{2}, 1, \frac{1 + j}{2}\right]$ to form the third data sequence [s(k)]. The convolution modulation process is as follows:
It is assumed that the fourth data sequence [x(m)] obtained after BPSK constellation modulation is [1, 1, -1, -1. 1]. The corresponding constellation points are shown in FIG. 2, including [1, -1].

In an example, FIG. 3 is a diagram of constellation points corresponding to a third data sequence according to embodiments of the present application. Then 0 is inserted after each element of the fourth data sequence [x(m)] to form the first data sequence [y(n)]: [1, 0, 1, 0, -1, 0, -1, 0, 1, 0].

The first data sequence [y(n)] is then subjected to circular convolution with the second data sequence $\left[\frac{1 - j}{2}, 1, \frac{1 + j}{2}\right]$ to form the third data sequence [s(k)]: [1, 1, 1, -j, -1, -1, -1, j, 1, 1]. The corresponding constellation points are shown in FIG. 3, including [1, -1, j, -j]. In the third data sequence [s(k)], the modulus value of each data element is equal to 1, and the phase difference between adjacent data elements is 0 or $\pm \pm \frac{π}{2}$.

Example Three: This example describes performing convolution modulation on a first data sequence and a second data sequence [a, b, c] to obtain a third data sequence, where the first data sequence is obtained based on a BPSK modulated sequence. The following describes the generation process of the third data sequence by using the second data sequence $\left[a, b, c\right] = \left[\frac{1 - j}{2}, 1, \frac{1 + j}{2}\right]$ as an example.

In this example, first, it is assumed that the fourth data sequence [x(m)] obtained after BPSK constellation modulation is [1, 1, -1, -1, 1]. Then 0 is inserted before each element of the data sequence [x(m)] to form the first data sequence [y(n)]: [0, 1, 0, 1, 0, -1, 0, -1, 0, 1]. The first data sequence [y(n)] is then subjected to circular convolution with the data sequence $\left[\frac{1 - j}{2}, 1, \frac{1 + j}{2}\right]$ to form the third data sequence [s(k)]: [1, 1, 1, 1, -j, -1 - 1, -1, j, 1].

Example Four: This example describes performing convolution modulation on a first data sequence and a second data sequence [a, b, c] to obtain a third data sequence, where the first data sequence is obtained based on a BPSK modulated sequence.

In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence [a, b, c] to form the third data sequence [s(k)].

Inserting 0 between every two adjacent elements of the fourth data sequence [x(m)] includes: (1) inserting 0 after each element of the fourth data sequence [x(m)] and performing convolution modulation to form the third data sequence [s(k)]1; or (2) inserting 0 before each element of the fourth data sequence [x(m)] and performing convolution modulation to form the third data sequence [s(k)]2. The third data sequence [s(k)]1 and the third data sequence [s(k)]2 include the same elements and differ only by a cyclic shift.

Example Five: This example describes performing convolution modulation on a first data sequence and a second data sequence [a, b, c] to obtain a third data sequence, where the first data sequence is obtained based on a BPSK modulated sequence. The following describes the generation process of the third data sequence by using the second data sequence $\left[a, b, c\right] = \left[\frac{1 + j}{2}, 1, \frac{1 - j}{2}\right]$ as an example.

In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence $\left[a, b, c\right] = \left[\frac{1 + j}{2}, 1, \frac{1 - j}{2}\right]$ to form the third data sequence [s(k)]. The convolution modulation process is as follows:
First, it is assumed that the fourth data sequence x(m) after BPSK constellation modulation is [1, 1, -1, -1, 1]. Then 0 is inserted after each element of the fourth data sequence x(m) to form the first data sequence y(n): [1, 0, 1, 0, -1, 0, -1, 0, 1, 0]. The first data sequence y(n) is then subjected to circular convolution with the data sequence $\left[\frac{1 + j}{2}, 1, \frac{1 - j}{2}\right]$ to form the third data sequence s(k): [1, 1, 1, j, -1, -1, -1, -j, 1, 1].

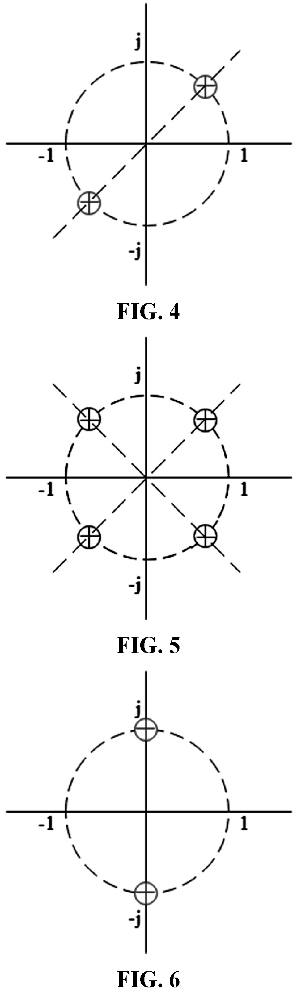

Example Six: This example describes performing convolution modulation on a first data sequence and a second data sequence [a, b, c] to obtain a third data sequence, where the first data sequence is obtained based on a BPSK modulated sequence. The following describes the generation process of the third data sequence by using the second data sequence $\left[a, b, c\right] = \left[\frac{1 - j}{2}, 1, \frac{1 + j}{2}\right]$ as an example. In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence $\left[a, b, c\right] = \left[\frac{1 - j}{2}, 1, \frac{1 + j}{2}\right]$ to form the third data sequence [s(k)]. The convolution modulation process is as follows:
In an example, FIG. 4 is a diagram of constellation points corresponding to a fourth data sequence according to embodiments of the present application. FIG. 5 is a diagram of constellation points corresponding to a third data sequence according to embodiments of the present application. It is assumed that the fourth data sequence [x(m)] obtained after BPSK constellation modulation is $\left[\frac{1 + j}{\sqrt{2}}, \frac{1 + j}{\sqrt{2}}, \frac{- 1 - j}{\sqrt{2}}, \frac{- 1 - j}{\sqrt{2}}, \frac{1 + j}{\sqrt{2}}\right]$. The corresponding constellation points are shown in FIG. 4, including $\left[\frac{1 + j}{\sqrt{2}}, \frac{- 1 - j}{\sqrt{2}}\right]$, also expressed as [exp(j*pi/4), exp(-j*pi*3/4)].

Then 0 is inserted after each element of the fourth data sequence [x(m)] to form the first data sequence [y(n)]: $\left[\frac{1 + j}{\sqrt{2}}, 0, \frac{1 + j}{\sqrt{2}}, 0, \frac{- 1 - j}{\sqrt{2}}, 0, \frac{- 1 - j}{\sqrt{2}}, 0, \frac{1 + j}{\sqrt{2}}, 0\right]$.

The first data sequence y(n) is then subjected to circular convolution with the data sequence $\left[\frac{1 - j}{2}, 1, \frac{1 + j}{2}\right]$ to form the third data sequence s(k): $\left[\frac{1 + j}{\sqrt{2}}, \frac{1 + j}{\sqrt{2}}, \frac{1 + j}{\sqrt{2}}, \frac{1 - j}{\sqrt{2}}, \frac{- 1 - j}{\sqrt{2}}, \frac{- 1 - j}{\sqrt{2}}, \frac{- 1 - j}{\sqrt{2}}, \frac{- 1 + j}{\sqrt{2}}, \frac{1 + j}{\sqrt{2}}, \frac{1 + j}{\sqrt{2}}\right]$. The corresponding constellation points are shown in FIG. 5, including $\left[\frac{1 + j}{\sqrt{2}}, \frac{- 1 + j}{\sqrt{2}}, \frac{- 1 - j}{\sqrt{2}}, \frac{1 - j}{\sqrt{2}}\right]$, also expressed as [exp(j*pi/4), exp(j*pi*3/4), exp(-j*pi*3/4), exp(-j*pi/4)].

It is assumed that the constellation points corresponding to the fourth data sequence [x(m)] obtained after BPSK constellation modulation include $\left[\frac{- 1 - j}{\sqrt{2}}, \frac{1 - j}{\sqrt{2}}\right]$, also expressed as [exp(j*pi*3/4), exp(-j*pi/4)].

Example Seven: This example describes performing convolution modulation on a first data sequence and a second data sequence [a, b, c] to obtain a third data sequence, where the first data sequence is obtained based on a BPSK modulated sequence. The following describes the generation process of the third data sequence by using the second data sequence $\left[a, b, c\right] = \left[\frac{1 + j}{2}, 1, \frac{1 - j}{2}\right]$ as an example. In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence $\left[a, b, c\right] = \left[\frac{1 + j}{2}, 1, \frac{1 - j}{2}\right]$ to form the third data sequence [s(k)]. The convolution modulation process is as follows:
First, it is assumed that the fourth data sequence [x(m)] formed after BPSK constellation modulation is $\left[\frac{1 + j}{\sqrt{2}}, \frac{1 + j}{\sqrt{2}}, \frac{- 1 - j}{\sqrt{2}}, \frac{- 1 - j}{\sqrt{2}}, \frac{1 + j}{\sqrt{2}}\right]$. Then 0 is inserted after each element of the fourth data sequence [x(m)] to form the first data sequence [y(n)]: $\left[\frac{1 + j}{\sqrt{2}}, 0, \frac{1 + j}{\sqrt{2}}, 0, \frac{- 1 - j}{\sqrt{2}}, 0, \frac{- 1 - j}{\sqrt{2}}, 0, \frac{1 + j}{\sqrt{2}}, 0\right]$, and then circular convolution is performed on the first data sequence and the data sequence $\left[\frac{1 + j}{2}, 1, \frac{1 - j}{2}\right]$ to form the third data sequence [s(k)]: $\left[\frac{1 + j}{\sqrt{2}}, \frac{1 + j}{\sqrt{2}}, \frac{1 + j}{\sqrt{2}}, \frac{- 1 + j}{\sqrt{2}}, \frac{- 1 - j}{\sqrt{2}}, \frac{- 1 - j}{\sqrt{2}}, \frac{- 1 - j}{\sqrt{2}}, \frac{1 - j}{\sqrt{2}}, \frac{1 + j}{\sqrt{2}}, \frac{1 + j}{\sqrt{2}}\right]$.

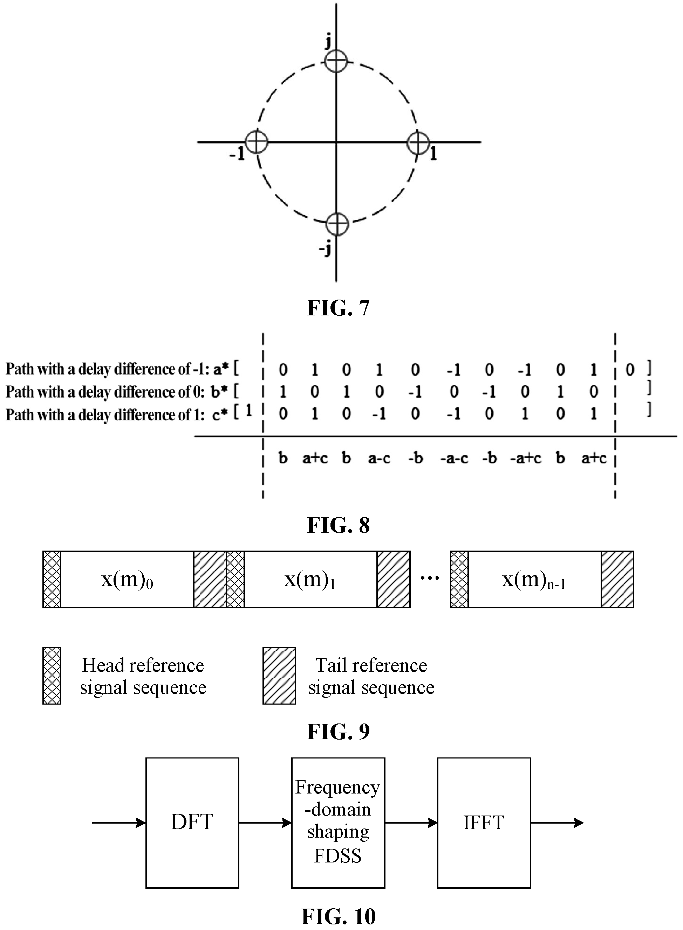

Example Eight: This example describes performing convolution modulation on a first data sequence and a second data sequence [a, b, c] to obtain a third data sequence, where the first data sequence is obtained based on a BPSK modulated sequence. FIG. 6 is a diagram of constellation points corresponding to a fourth data sequence according to embodiments of the present application. FIG. 7 is a diagram of constellation points corresponding to a third data sequence according to embodiments of the present application. The following describes the generation process of the third data sequence by using the second data sequence $\left[a, b, c\right] = \left[\frac{1 - j}{2}, 1, \frac{1 + j}{2}\right]$ as an example. In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence $\left[a, b, c\right] = \left[\frac{1 - j}{2}, 1, \frac{1 + j}{2}\right]$ to form the third data sequence [s(k)]. The convolution modulation process is as follows:
First, it is assumed that the fourth data sequence x(m) after BPSK constellation modulation is [j, j, -j, -j, j]. The corresponding constellation points are shown in FIG. 6, including [j, -j]. Then 0 is inserted after each element of the fourth data sequence x(m) to form the first data sequence y(n): [j, 0, j, 0, -j, 0, -j, 0, j, 0]. The first data sequence y(n) is then subjected to circular convolution with the second data sequence $\left[\frac{1 - j}{2}, 1, \frac{1 + j}{2}\right]$ to form the third data sequence s(k): [j, j, j, 1, -j, -j, -j, -1, j, j]. The corresponding constellation points are shown in FIG. 7, including [1, -1, j, -j].

Example Nine: This example describes performing convolution modulation on a first data sequence and a second data sequence [a, b, c] to obtain a third data sequence, where the first data sequence is obtained based on a BPSK modulated sequence. The following describes the generation process of the third data sequence by using the second data sequence $\left[a, b, c\right] = \left[\frac{1 + j}{2}, 1, \frac{1 - j}{2}\right]$ as an example. In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence $\left[a, b, c\right] = \left[\frac{1 + j}{2}, 1, \frac{1 - j}{2}\right]$ to form the third data sequence [s(k)]. The convolution modulation process is as follows:
First, it is assumed that the fourth data sequence [x(m)] formed after BPSK constellation modulation is [j, j, -j, -j, j]. Then 0 is inserted after each element of the fourth data sequence [x(m)] to form the first data sequence [y(n)]: [j, 0, j, 0, -j, 0, -j, 0, j, 0], and then circular convolution is performed on the first data sequence [j, 0, j, 0, -j, 0, -j, 0, j, 0] and the data sequence $\left[\frac{1 + j}{2}, 1, \frac{1 - j}{2}\right]$ to form the third data sequence [s(k)]: [j, j, j, -1, -j, -j, -j, 1, j, j].

Example Ten: This example describes performing convolution modulation on a first data sequence and a first product sequence p*[a, b, c], where the first data sequence is obtained based on a BPSK modulated sequence.

In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the data sequence p*[a, b, c] to form the third data sequence [s(k)]. The convolution modulation process is as follows:
First, the fourth data sequence [x(m)] is formed after BPSK constellation modulation. The constellation point set of the fourth data sequence [x(m)] is [exp(j*θ), exp(-j*(pi-θ))]. The modulus values of the two constellation points in the constellation point set are both 1 with a phase difference of pi. Then 0 is inserted after each element of the fourth data sequence [x(m)] to form the first data sequence [y(n)]; or 0 is inserted before each element of the fourth data sequence [x(m)] to form the first data sequence [y(n)]. The first data sequence y(n) is subjected to convolution modulation with the second data sequence [a, b, c] and then multiplied by the power factor p to form the third data sequence s(k). Alternatively, the first data sequence y(n) is first multiplied by the power factor p and then subjected to convolution modulation with the second data sequence [a, b, c] to form the third data sequence s(k).

Table 2 lists the results of convolution modulation on the fourth data sequence x(m) assumed to be [1, 1, -1, -1, 1] and eight data sequences p*[a, b, c].

**Table 2 Modulation of third product sequences**

| No. | p*[a, b, c] | [s(k)] |
|---|---|---|
| 1 | $\frac{\sqrt{2}}{2} \left[1,1-j,-j\right]$ | $\left[\frac{1 - j}{\sqrt{2}}, \frac{1 - j}{\sqrt{2}}, \frac{1 - j}{\sqrt{2}}, \frac{1 + j}{\sqrt{2}}, \frac{- 1 + j}{\sqrt{2}}, \frac{- 1 + j}{\sqrt{2}}, \frac{- 1 + j}{\sqrt{2}}, \frac{- 1 - j}{\sqrt{2}}, \frac{1 - j}{\sqrt{2}}, \frac{1 - j}{\sqrt{2}}\right]$ |
| 2 | $\frac{\sqrt{2}}{2} \left[-j,1-j,1\right]$ | $\left[\frac{1 - j}{\sqrt{2}}, \frac{1 - j}{\sqrt{2}}, \frac{1 - j}{\sqrt{2}}, \frac{- 1 - j}{\sqrt{2}}, \frac{- 1 + j}{\sqrt{2}}, \frac{- 1 + j}{\sqrt{2}}, \frac{- 1 + j}{\sqrt{2}}, \frac{1 + j}{\sqrt{2}}, \frac{1 - j}{\sqrt{2}}, \frac{1 - j}{\sqrt{2}}\right]$ |
| 3 | $\frac{\sqrt{2}}{2} \left[1,1+j, j\right]$ | $\left[\frac{1 + j}{\sqrt{2}}, \frac{1 + j}{\sqrt{2}}, \frac{1 + j}{\sqrt{2}}, \frac{1 - j}{\sqrt{2}}, \frac{- 1 - j}{\sqrt{2}}, \frac{- 1 - j}{\sqrt{2}}, \frac{- 1 - j}{\sqrt{2}}, \frac{- 1 + j}{\sqrt{2}}, \frac{1 + j}{\sqrt{2}}, \frac{1 + j}{\sqrt{2}}\right]$ |
| 4 | $\frac{\sqrt{2}}{2} \left[j,1+j,1\right]$ | $\left[\frac{1 - j}{\sqrt{2}}, \frac{1 - j}{\sqrt{2}}, \frac{1 - j}{\sqrt{2}}, \frac{1 + j}{\sqrt{2}}, \frac{- 1 + j}{\sqrt{2}}, \frac{- 1 + j}{\sqrt{2}}, \frac{- 1 + j}{\sqrt{2}}, \frac{- 1 - j}{\sqrt{2}}, \frac{1 - j}{\sqrt{2}}, \frac{1 - j}{\sqrt{2}}\right]$ |
| 5 | $\frac{\sqrt{2}}{2} \left[-1,-1+j, j\right]$ | $\left[\frac{1 + j}{\sqrt{2}}, \frac{1 + j}{\sqrt{2}}, \frac{1 + j}{\sqrt{2}}, \frac{- 1 + j}{\sqrt{2}}, \frac{- 1 - j}{\sqrt{2}}, \frac{- 1 - j}{\sqrt{2}}, \frac{- 1 - j}{\sqrt{2}}, \frac{1 - j}{\sqrt{2}}, \frac{1 + j}{\sqrt{2}}, \frac{1 + j}{\sqrt{2}}\right]$ |
| 6 | $\frac{\sqrt{2}}{2} \left[j,-1+j,-1\right]$ | $\left[\frac{- 1 + j}{\sqrt{2}}, \frac{- 1 + j}{\sqrt{2}}, \frac{- 1 + j}{\sqrt{2}}, \frac{1 + j}{\sqrt{2}}, \frac{1 - j}{\sqrt{2}}, \frac{1 - j}{\sqrt{2}}, \frac{1 - j}{\sqrt{2}}, \frac{- 1 - j}{\sqrt{2}}, \frac{- 1 + j}{\sqrt{2}}, \frac{- 1 + j}{\sqrt{2}}\right]$ |
| 7 | $\frac{\sqrt{2}}{2} \left[-1,-1-j,-j\right]$ | $\left[\frac{1 - j}{\sqrt{2}}, \frac{- 1 - j}{\sqrt{2}}, \frac{- 1 - j}{\sqrt{2}}, \frac{- 1 + j}{\sqrt{2}}, \frac{1 + j}{\sqrt{2}}, \frac{1 + j}{\sqrt{2}}, \frac{1 + j}{\sqrt{2}}, \frac{1 - j}{\sqrt{2}}, \frac{- 1 - j}{\sqrt{2}}, \frac{- 1 - j}{\sqrt{2}}\right]$ |
| 8 | $\frac{\sqrt{2}}{2} \left[-j,-1-j,-1\right]$ | $\left[\frac{- 1 - j}{\sqrt{2}}, \frac{- 1 - j}{\sqrt{2}}, \frac{- 1 - j}{\sqrt{2}}, \frac{1 - j}{\sqrt{2}}, \frac{1 + j}{\sqrt{2}}, \frac{1 + j}{\sqrt{2}}, \frac{1 + j}{\sqrt{2}}, \frac{- 1 + j}{\sqrt{2}}, \frac{- 1 - j}{\sqrt{2}}, \frac{- 1 - j}{\sqrt{2}}\right]$ |

Example Eleven: This example describes performing convolution modulation on a first data sequence and a second data sequence [a, b, c] to obtain a third data sequence, where the first data sequence is obtained based on a BPSK modulated sequence. FIG. 8 is a diagram illustrating an implementation of a multipath delay operation according to embodiments of the present application. The following describes the generation process of the third data sequence by using the second data sequence $\left[a, b, c\right] = \left[\frac{1 - j}{2}, 1, \frac{1 + j}{2}\right]$ as an example.

In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence [a, b, c] to form the third data sequence [s(k)]. The convolution modulation process is as follows:
(1) First, it is assumed that the fourth data sequence [x(m)] is formed after BPSK constellation modulation.
(2) Then 0 is inserted after each element of the fourth data sequence [x(m)] to form the first data sequence [y(n)]; or 0 is inserted before each element of the fourth data sequence [x(m)] to form the first data sequence [y(n)].
(3) The first data sequence [y(n)] is subjected to a multipath circular delay operation with a delay path of *aD*⁻¹ + *bD*⁰ *+ cD*¹ to form the third data sequence [s(k)].

The three non-zero elements a, b, and c in the second data sequence [a, b, c] are coefficients of three delay paths. The delay difference of the delay path corresponding to the first element a is -1. The delay difference of the delay path corresponding to the second element b is 0. The delay difference of the delay path corresponding to the third element c is 1. *D*⁻¹ corresponds to a delay path with a delay difference of -1. *D*⁰ corresponds to a delay path with a delay difference of 0 (that is, no delay). *D*¹ corresponds to a delay path with a delay difference of 1.

As shown in FIG. 8, it is assumed that the fourth data sequence x(m) obtained after BPSK constellation modulation is [1, 1, -1, -1, 1]. The sequence passes through a delay path with a delay difference of -1, a delay path with a delay difference of 0, and a delay path with a delay difference of 1 to form the third data sequence [s(k)].

Assuming that the fourth data sequence [x(m)] obtained after BPSK constellation modulation is [1, 1, -1, -1, 1] and the second data sequence $\left[a, b, c\right] = \left[\frac{1 - j}{2}, 1, \frac{1 + j}{2}\right]$, the third data sequence [s(k)] = [b, a+c, b, a-c, -b, -a-c, -b, -a+c, b, a+c]= [1, 1, 1, -j, -1, -1, -1, j, 1, 1].

Example Twelve: This example describes performing convolution modulation on a first data sequence and a first product sequence p*[a, b, c], where the first data sequence is obtained based on a BPSK modulated sequence.

In this example, a binary data sequence [b(i)] composed of 0 and 1 is subjected to BPSK constellation modulation to form a fourth data sequence [x(m)]; then 0 is inserted between every two adjacent elements of the fourth data sequence [x(m)] to form the first data sequence [y(n)]; and then convolution modulation is performed on the first data sequence [y(n)] and the second data sequence [a, b, c] to form the third data sequence [s(k)]. The convolution modulation process is as follows:
(1) First, the fourth data sequence [x(m)] is formed after BPSK constellation modulation.
(2) Then 0 is inserted after each element of the fourth data sequence [x(m)] to form the first data sequence [y(n)]; or 0 is inserted before each element of the fourth data sequence [x(m)] to form the first data sequence [y(n)], where n = 0, 1, 2, ..., N-1.
(3) The first data sequence [y(n)] and the data sequence [d(v)] are subjected to circular convolution, where d(V-1) = a, d(0) = b, d(1) = c, d(v) = 0 for v = the other values; v = 0, 1, 2, ..., V-1; and N = V. That is, $\begin{matrix}s \left(k\right) = y \left(n\right) ⊗ d \left(v\right) \\ = \left[y\left(0\right),y\left(1\right),y\left(2\right),y\left(3\right),y\left(4\right),y\left(5\right),…,y\left(N-5\right),y\left(N-4\right),y\left(N-3\right),y\left(N-2\right),y\left(N-1\right)\right] ⊗ \\ \left[d\left(0\right),d\left(1\right),d\left(2\right),d\left(3\right),d\left(4\right),d\left(5\right),…,d\left(N-5\right),d\left(N-4\right),d\left(N-3\right),d\left(N-2\right),d\left(N-1\right)\right] \\ = \left[x\left(0\right),0,x\left(1\right),0,x\left(2\right),0,…,0,x\left(M-2\right),0,x\left(M-1\right),0\right] ⊗ \left[b,c,0,0,0,…,0,0,0,0,a\right]\end{matrix}$

Example Thirteen: In this example, both the reference signal data and the constellation-modulated data use BPSK modulation. FIG. 9 is a diagram illustrating reference signal insertion according to embodiments of the present application. As shown in FIG. 9, it is assumed that there are n-1 OFDM symbols, each OFDM symbol includes reference signal data and constellation-modulated data, and both the reference signal data and the constellation-modulated data use a BPSK modulation scheme. The same head reference signal sequence is inserted before each OFDM symbol, and the same tail reference signal sequence is inserted after each OFDM symbol. The reference signal data includes a head reference signal sequence and a tail reference signal sequence. The length of the tail reference signal sequence is greater than the length of the head reference signal sequence, similar to the function of a cyclic prefix (CP), thereby facilitating signal estimation and phase tracking.

Example Fourteen: This example describes performing waveform modulation on a third data sequence [s(k)]. FIG. 10 is a flowchart of performing frequency-domain shaping on a third data sequence according to embodiments of the present application. As shown in FIG. 10, the third data sequence [s(k)] undergoes discrete Fourier transform (DFT), resource mapping, frequency-domain shaping, and data 0 being placed at positions of some subcarriers to achieve oversampled inverse discrete Fourier transform (IDFT) and digital-to-analog conversion, and then is transmitted on a radio frequency link.

In an example, reference sequence data is added to both ends of the third data sequence [s(k)] or is subjected to filtering after IFFT.

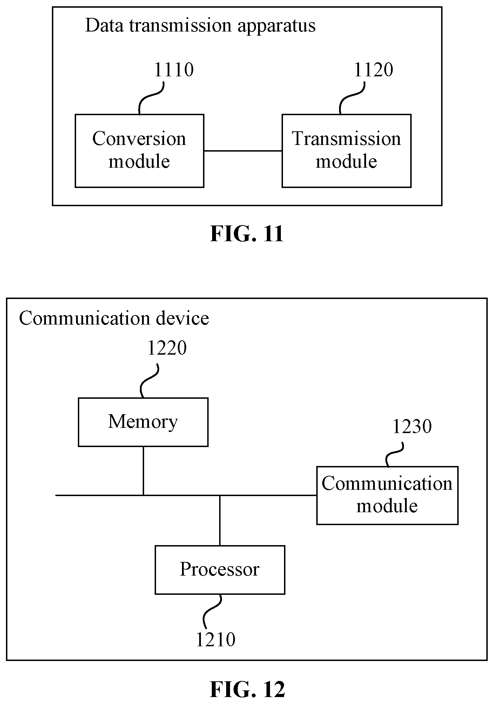

In an embodiment, FIG. 11 is a block diagram of a data transmission apparatus according to embodiments of the present application. As shown in FIG. 11, the data transmission apparatus of this embodiment includes a conversion module 1110 and a transmission module 1120.

The conversion module 1110 is configured to perform convolution modulation on a first data sequence and a second data sequence to obtain a third data sequence, where the first data sequence and the second data sequence are pre-generated.

The transmission module 1120 is configured to transmit the third data sequence on a physical time-frequency resource.

The second data sequence includes three non-zero elements: a first element, a second element, and a third element. The ratio of the first element to the second element and the ratio of the third element to the second element are complex conjugates of each other and are different from each other.

In an embodiment, the data transmission apparatus also includes a first sequence generation module configured to perform zero insertion between every two adjacent elements in a fourth data sequence that is pre-generated to obtain the first data sequence, where the number of elements in the fourth data sequence is greater than 1.

In an embodiment, the modulus value of the ratio of the first element to the second element is equal to the modulus value of the ratio of the third element to the second element.

In an embodiment, the complex phase of the ratio of the first element to the second element and the complex phase of the ratio of the third element to the second element are opposite to each other.

In an embodiment, the ratio of the first element to the second element and the ratio of the third element to the second element are complex conjugates of each other.

In an embodiment, the complex phase of the ratio of the first element to the second element and the complex phase of the ratio of the third element to the second element each include or and the complex phase of the ratio of the first element to the third element includes or $- \frac{π}{2}$.

In an embodiment, the value of the ratio of the first element to the second element includes $\frac{1 - j}{2}$ or $\frac{1 + j}{2}$; and the value of the ratio of the third element to the second element includes $\frac{1 - j}{2}$ or $\frac{1 + j}{2}$.

In an embodiment, the sum of the first element and the third element is equal to the second element.

In an embodiment, performing convolution modulation on the first data sequence and the second data sequence to obtain the third data sequence includes multiplying a power factor that is pre-configured by the second data sequence to obtain a first product sequence; and performing convolution modulation on the first data sequence and the first product sequence to obtain the third data sequence. The modulus value of the product of the power factor and the second element in the second data sequence is equal to 1.

In an embodiment, performing convolution modulation on the first data sequence and the second data sequence to obtain the third data sequence includes performing convolution modulation on the first data sequence and the second data sequence to obtain a convolution-modulated sequence; and multiplying the convolution-modulated sequence by a power factor that is pre-configured to obtain the third data sequence.

In an embodiment, performing convolution modulation on the first data sequence and the second data sequence to obtain the third data sequence includes multiplying the first data sequence by a power factor that is pre-configured to obtain a second product sequence; and performing convolution modulation on the second product sequence and the second data sequence to obtain the third data sequence.

In an embodiment, the value of the power factor includes 1 or $\frac{\sqrt{2}}{2}$.

In an embodiment, the second data sequence includes one set of the following sets of elements: $\frac{1 - j}{2} , 1 , \frac{1 + j}{2} ;$ $\frac{1 + j}{2} , 1 , \frac{1 - j}{2} ;$ $1 , 1 - j , - j ;$ $- j , 1 - j , 1 ;$ $1,1 + j , j ;$ $j , 1 + j , 1 ;$ $- 1 , - 1 + j , j ;$ $j , - 1 + j , - 1 ;$ $- 1 , - 1 - j , - j ;$ or $- j , - 1 - j , - 1 .$

In an embodiment, the data transmission apparatus also includes a fourth sequence generation module configured to perform constellation modulation on a pre-generated binary data sequence to obtain the fourth data sequence.

In an embodiment, the fourth data sequence is a binary phase shift keying (BPSK) modulated sequence.

In an embodiment, the fourth data sequence includes: constellation-modulated data; or constellation-modulated data and reference signal data.

In an embodiment, performing zero insertion between every two adjacent elements in the fourth data sequence includes one of the following: inserting a zero between every two adjacent elements in the fourth data sequence and inserting a zero after a last element in the fourth data sequence; inserting a zero after each element in the fourth data sequence; inserting a zero between every two adjacent elements in the fourth data sequence and inserting a zero before a first element in the fourth data sequence; or inserting a zero before each element in the fourth data sequence.

In an embodiment, the convolution modulation includes circular convolution or a multipath delay operation.

In an embodiment, when the convolution modulation includes the multipath delay operation and the second data sequence includes the three non-zero elements, the three non-zero elements in the second data sequence are coefficients of three delay paths.

In an embodiment, the delay difference of the delay path corresponding to the first element in the second data sequence is -1, the delay difference of the delay path corresponding to the second element in the second data sequence is 0, and the delay difference of the delay path corresponding to the third element in the second data sequence is 1.

In an embodiment, performing convolution modulation on the first data sequence and the second data sequence to obtain the third data sequence includes performing a multipath circular delay operation with a delay path of a first value on the first data sequence, where the first value is the sum of the product of the first element in the second data sequence and the delay path corresponding to the first element, the product of the second element in the second data sequence and the delay path corresponding to the second element, and the product of the third element in the second data sequence and the delay path corresponding to the third element.

In an embodiment, performing convolution modulation on the first data sequence and the second data sequence to obtain the third data sequence includes performing circular convolution on the first data sequence and the second data sequence, where the coefficient of the delay path with a delay difference of -1 is equal to the first element in the second data sequence, the coefficient of the delay path with a delay difference of 0 is equal to the second element in the second data sequence, and the coefficient of the delay path with a delay difference of 1 is equal to the third element in the second data sequence.

In an embodiment, performing convolution modulation on the first data sequence and the second data sequence to obtain the third data sequence includes performing circular convolution on the first data sequence and the second data sequence, where in the second data sequence, the last-position element is the first element, the first-position element is the second element, the second-position element is the third element, and other-position elements are 0.

In an embodiment, performing convolution modulation on the first data sequence and the second data sequence to obtain the third data sequence includes performing convolution modulation on the first data sequence and the second data sequence to obtain the third data sequence, where the second data sequence includes the same number of elements as the first data sequence.

In an embodiment, the data transmission apparatus also includes a processing module configured to multiply the third data sequence by a pre-configured complex constant to obtain a new third data sequence, where the third data sequence is subjected to at least one of the following operations: adding a reference sequence; Fourier transform; frequency-domain shaping; inverse Fourier transform; or filtering.

The data transmission apparatus of this embodiment is configured to perform the data transmission method of the embodiment shown in FIG. 1. The apparatus of this embodiment and the method have similar implementation principles and technical effects. The implementation principles and technical effects of the apparatus are not described here again.

In an embodiment, FIG. 12 is a diagram illustrating the structure of a communication device according to embodiments of the present application. As shown in FIG. 12, the communication device of the present application includes a processor 1210, a memory 1220, and a communication module 1230. One or more processors 1210 may be provided in the device. FIG. 12 shows one processor 1210 as an example. One or more memories 1220 may be provided in the device. FIG. 12 shows one memory 1220 as an example. The processor 1210, the memory 1220, and the communication module 1230 of the device may be connected by a bus or otherwise. FIG. 12 uses connection by a bus as an example. In this embodiment, the device may be a terminal or a network.

As a computer-readable storage medium, the memory 1220 may be configured to store software programs, computer-executable programs, and modules, such as program instructions/modules corresponding to the device of any embodiment of the present application (for example, the conversion module 1110 and the transmission module 1120 of the data transmission apparatus). The memory 1220 may include a program storage region and a data storage region. The program storage region may store an operating system and an application program required by at least one function. The data storage region may store data created according to the use of the device. Additionally, the memory 1220 may include a high-speed random-access memory and may also include a nonvolatile memory such as at least one disk memory, a flash memory, or another nonvolatile solid-state memory. In some examples, the memory 1220 may be remote relative to the processor 1210 and connectable to the device via a network. Examples of the network include, but are not limited to, the Internet, an intranet, a local area network, a mobile communication network, and a combination thereof. The communication module 1230 is used for data interaction between multiple communication devices.

The preceding communication device may be configured to execute the data transmission method of any preceding embodiment and has the corresponding functions and effects.

Embodiments of the present application provide a storage medium storing computer-executable instructions which, when executed by a computer processor, cause the computer processor to perform a data transmission method. The method includes performing convolution modulation on a first data sequence and a second data sequence to obtain a third data sequence, where the first data sequence and the second data sequence are pre-generated; and transmitting the third data sequence on a physical time-frequency resource. The second data sequence includes three non-zero elements: a first element, a second element, and a third element. The ratio of the first element to the second element and the ratio of the third element to the second element are complex conjugates of each other and are different from each other.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

Preferred embodiments of the present application are described above, which are not intended to limit the present application. Those skilled in the art may make various modifications and variations to the present application. Any modifications, equivalent substitutions, and improvements made within the spirit and principle of the present application are within the scope of the present application.

## Claims

1. A data transmission method, comprising:
performing convolution modulation on a first data sequence and a second data sequence to obtain a third data sequence; and
transmitting the third data sequence on a physical time-frequency resource;
wherein the first data sequence and the second data sequence are pre-generated; the second data sequence comprises three non-zero elements: a first element, a second element, and a third element; and a ratio of the first element to the second element and a ratio of the third element to the second element are complex conjugates of each other and are different from each other.

2. The method of claim 1, further comprising:
performing zero insertion between every two adjacent elements in a fourth data sequence to obtain the first data sequence, wherein the fourth data sequence is pre-generated and comprises more than one element.

3. The method of claim 1, wherein a modulus value of the ratio of the first element to the second element is equal to a modulus value of the ratio of the third element to the second element.

4. The method of claim 1, wherein a complex phase of the ratio of the first element to the second element and a complex phase of the ratio of the third element to the second element are opposite to each other.

5. The method of claim 1, wherein
a complex phase of the ratio of the first element to the second element and a complex phase of the ratio of the third element to the second element each comprise $\frac{π}{4}$ or $- \frac{π}{4}$; or
a complex phase of a ratio of the first element to the third element comprises $\frac{π}{2}$ or $- \frac{π}{2}$.

6. The method of claim 1, wherein
a value of the ratio of the first element to the second element comprises $\frac{1 - j}{2}$ or $\frac{1 + j}{2}$; or
a value of the ratio of the third element to the second element comprises $\frac{1 - j}{2}$ or $\frac{1 + j}{2}$.

7. The method of claim 1, wherein a sum of the first element and the third element is equal to the second element.

8. The method of claim 1, wherein performing convolution modulation on the first data sequence and the second data sequence to obtain the third data sequence comprises:
multiplying a power factor by the second data sequence to obtain a first product sequence; and
performing convolution modulation on the first data sequence and the first product sequence to obtain the third data sequence;
wherein the power factor is pre-configured; and a modulus value of a product of the power factor and the second element in the second data sequence is equal to 1.

9. The method of claim 1, wherein performing convolution modulation on the first data sequence and the second data sequence to obtain the third data sequence comprises:
performing convolution modulation on the first data sequence and the second data sequence to obtain a convolution-modulated sequence; and
multiplying the convolution-modulated sequence by a power factor to obtain the third data sequence; wherein the power factor is pre-configured.

10. The method of claim 1, wherein performing convolution modulation on the first data sequence and the second data sequence to obtain the third data sequence comprises:
multiplying the first data sequence by a power factor to obtain a second product sequence, wherein the power factor is pre-configured; and
performing convolution modulation on the second product sequence and the second data sequence to obtain the third data sequence.

11. The method of any one of claims 8 to 10, wherein a value of the power factor comprises 1 or $\frac{\sqrt{2}}{2}$.

12. The method of claim 1, wherein the second data sequence comprises one set of the following sets of elements: $\frac{1 - j}{2} , 1 , \frac{1 + j}{2} ;$ $\frac{1 + j}{2} , 1 , \frac{1 - j}{2} ;$ $1 , 1 - j , - j ;$ $- j , 1 - j , 1 ;$ $1 , 1 + j , j ;$ $j , 1 + j , 1 ;$ $- 1 , - 1 + j , j ;$ $j , - 1 + j , - 1 ;$ $- j , - 1 - j , - j ;$ or $- j , - 1 - j , - 1 .$

13. The method of claim 2, further comprising performing constellation modulation on a pre-generated binary data sequence to obtain the fourth data sequence.

14. The method of claim 2 or 13, wherein the fourth data sequence is a binary phase shift keying, BPSK, modulated sequence.

15. The method of claim 2 or 13, wherein the fourth data sequence comprises: constellation-modulated data; or constellation-modulated data and reference signal data.

16. The method of claim 2 or 13, wherein performing zero insertion between every two adjacent elements in the fourth data sequence comprises one of the following:
inserting a zero between every two adjacent elements in the fourth data sequence and inserting a zero after a last element in the fourth data sequence;
inserting a zero after each element in the fourth data sequence;
inserting a zero between every two adjacent elements in the fourth data sequence and inserting a zero before a first element in the fourth data sequence; or
inserting a zero before each element in the fourth data sequence.

17. The method of claim 1 or 2, wherein the convolution modulation comprises: circular convolution or a multipath delay operation.

18. The method of claim 17, wherein in response to the convolution modulation comprising the multipath delay operation and the second data sequence comprising the three non-zero elements, the three non-zero elements in the second data sequence are coefficients of three delay paths.

19. The method of claim 17, wherein a delay difference of a delay path corresponding to the first element in the second data sequence is -1, a delay difference of a delay path corresponding to the second element in the second data sequence is 0, and a delay difference of a delay path corresponding to the third element in the second data sequence is 1.

20. The method of claim 17, wherein performing convolution modulation on the first data sequence and the second data sequence to obtain the third data sequence comprises:
performing a multipath circular delay operation with a delay path of a first value on the first data sequence, wherein the first value is a sum of the following products:
a product of the first element in the second data sequence and a delay path corresponding to the first element,
a product of the second element in the second data sequence and a delay path corresponding to the second element, and
a product of the third element in the second data sequence and a delay path corresponding to the third element.

21. The method of claim 17, wherein performing convolution modulation on the first data sequence and the second data sequence to obtain the third data sequence comprises:
performing circular convolution on the first data sequence and the second data sequence, wherein
a coefficient of a delay path with a delay difference of -1 is equal to the first element in the second data sequence,
a coefficient of a delay path with a delay difference of 0 is equal to the second element in the second data sequence, and
a coefficient of a delay path with a delay difference of 1 is equal to the third element in the second data sequence.

22. The method of claim 17, wherein performing convolution modulation on the first data sequence and the second data sequence to obtain the third data sequence comprises:
performing circular convolution on the first data sequence and the second data sequence, wherein in the second data sequence, a last-position element is the first element, a first-position element is the second element, a second-position element is the third element, and other-position elements are 0.

23. The method of claim 17, wherein performing convolution modulation on the first data sequence and the second data sequence to obtain the third data sequence comprises:
performing convolution modulation on the first data sequence and the second data sequence to obtain the third data sequence, wherein the second data sequence comprises a same number of elements as the first data sequence.

24. The method of claim 1 or 2, further comprising:
multiplying the third data sequence by a pre-configured complex constant to obtain a new third data sequence, wherein the third data sequence is subjected to at least one of the following operations: adding a reference sequence; Fourier transform; frequency-domain shaping; inverse Fourier transform; or filtering.

25. A communication device, comprising a memory and at least one processor, wherein
the memory is configured to store at least one program; and
when executed by the at least one processor, the at least one program causes the at least one processor to perform the method of any one of claims 1 to 24.

26. A storage medium storing a computer program which, when executed by a processor, causes the processor to perform the method of any one of claims 1 to 24.
